(19) Europäisches Patentamt
European Patent Office
Office européen des brevets

(11) **EP 4 737 242 A1**

(12) **EUROPEAN PATENT APPLICATION**

(43) Date of publication:
06.05.2026 Bulletin 2026/19

(21) Application number: 25210805.5

(22) Date of filing: 23.10.2025

(51) International Patent Classification (IPC):
*B60W 30/12* (2020.01)   *B60W 40/13* (2012.01)

(52) Cooperative Patent Classification (CPC):
**B60W 40/13; B60W 30/12; B60W 60/001;**
B60W 2420/403; B60W 2520/105; B60W 2530/10;
B60W 2540/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.10.2024 CN 202411526367**

(71) Applicant: **ZF Commercial Vehicle Systems (Qingdao) Co., Ltd.**
**Qingdao, Shandong 266510 (CN)**

(72) Inventor: **Peng, Zihang**
**Shandong, 266510 (CN)**

(74) Representative: **Hafner & Kohl PartmbB**
**Schleiermacherstraße 25**
**90491 Nürnberg (DE)**

(54) **VEHICLE DRIVING LANE CONTROL METHOD, DEVICE, EQUIPMENT AND STORAGE MEDIUM**

(57)   The present application provides a method and an apparatus for controlling a vehicle traveling lane, a device, and a storage medium. The method includes: obtaining load information of a vehicle and lane information of a current lane for the vehicle, where the load information represents a current gross vehicle mass of the vehicle; determining steering wheel angle information of the vehicle based on the load information and the lane information, where the steering wheel angle information represents a degree of rotation of a steering wheel; and controlling the vehicle to travel in the current lane based on the steering wheel angle information. With the method in the present application, the accuracy of lane keeping is enhanced by adding the load information.

Obtain load information of a vehicle and lane information of a current lane for the vehicle, where the load information represents a current gross vehicle mass of the vehicle — S201

Determine steering wheel angle information of the vehicle based on the load information and the lane information, where the steering wheel angle information represents a degree of rotation of a steering wheel — S202

Control the vehicle to travel in the current lane based on the steering wheel angle information — S203

*FIG. 2*

Processed by Luminess, 75001 PARIS (FR)

EP 4 737 242 A1

# EP 4 737 242 A1

## Description

### Technical Field

The present application relates to the autonomous driving technology, and in particular to a method and an apparatus for controlling a vehicle traveling lane, a device, and a storage medium.

### Background Art

A lane keeping assist system (LKAS) is an advanced driver-assistance system in the field of autonomous driving that may assist a driver in keeping a vehicle within a traveling lane.

The LKAS can automatically control a steering wheel and adjust a traveling direction of the vehicle by sending a steering instruction to the steering wheel. Failure to precisely determine a degree of rotation of the steering wheel may affect the traveling precision of the vehicle in the lane, and lane departure may occur in the vehicle.

### Summary

The present application provides a method and an apparatus for controlling a vehicle traveling lane, a device, and a storage medium, to improve the driving precision of a vehicle in a lane.

In a first aspect, the present application provides a method for controlling a vehicle traveling lane, including:

obtaining load information of a vehicle and lane information of a current lane for the vehicle, where the load information represents a current gross vehicle mass of the vehicle;

determining steering wheel angle information of the vehicle based on the load information and the lane information, where the steering wheel angle information represents a degree of rotation of a steering wheel; and

controlling the vehicle to travel in the current lane based on the steering wheel angle information.

In a second aspect, the present application provides an apparatus for controlling a vehicle traveling lane, including:

an information obtaining module configured to obtain load information of a vehicle and lane information of a current lane for the vehicle, where the load information represents a current gross vehicle mass of the vehicle;

an information determination module configured to determine steering wheel angle information of the vehicle based on the load information and the lane information, where the steering wheel angle information represents a degree of rotation of a steering wheel; and

a vehicle control module configured to control the vehicle to travel in the current lane based on the steering wheel angle information.

In a third aspect, the present application provides an electronic device, including: a processor, and a memory communicatively connected to the processor, where

the memory stores computer-executable instructions; and

the processor executes the computer-executable instructions stored in the memory to implement the method according to the first aspect.

In a fourth aspect, the present application provides a computer-readable storage medium having computer-executable instructions stored therein. The computer-executable instructions, when executed by a processor, are used to implement the method according to the first aspect.

In a fifth aspect, the present application provides a computer program product including a computer program. The computer program, when executed by a processor, causes the method according to the first aspect to be implemented.

According to the method and apparatus for controlling a vehicle traveling lane, the device, and the storage medium that are provided in the present application, the load information of the vehicle and the lane information of the current lane for the vehicle are obtained, so that the current gross vehicle mass of the vehicle and the traveling condition in the lane may be obtained. The steering wheel angle information of the vehicle is determined based on the load information and the lane information, thereby improving the precision of determining the steering wheel angle information. Based on the steering wheel angle information, the steering wheel is controlled to rotate, thereby keeping the vehicle traveling in the current lane, enhancing the driving precision of the vehicle, and improving the driving experience of a user.

## Brief Description of the Drawings

The accompanying drawings herein, which are incorporated into and constitute a part of the description, illustrate embodiments conforming to the present application, and are used to explain the principle of the present application together with the description.

FIG. 1 is an architectural diagram of an LKAS according to an embodiment of the present application;
FIG. 2 is a schematic flowchart of a method for controlling a vehicle traveling lane according to an embodiment of the present application;
FIG. 3 is a schematic flowchart of a method for controlling a vehicle traveling lane according to an embodiment of the present application;
FIG. 4 is a schematic flowchart of a method for controlling a vehicle traveling lane according to an embodiment of the present application;
FIG. 5 is a block diagram of a structure of an apparatus for controlling a vehicle traveling lane according to an embodiment of the present application;
FIG. 6 is a block diagram of a structure of an apparatus for controlling a vehicle traveling lane according to an embodiment of the present application;
FIG. 7 is a block diagram of a structure of an electronic device according to an embodiment of the present application; and
FIG. 8 is a block diagram of a structure of an electronic device according to an embodiment of the present application.

Through the above-mentioned accompanying drawings, specific embodiments of the present application have been presented, which will be described in more detail below. These accompanying drawings and textual descriptions are not intended to limit the scope of the concept of the present application in any way, but rather to explain the concept of the present application to those skilled in the art with reference to specific embodiments.

## Detailed Description of Embodiments

To make objectives, technical solutions, and advantages of the present application clearer, a further detailed description of implementations of the present application is provided below with reference to the accompanying drawings.
It should be made clear that the described embodiments are some rather than all of the embodiments of the present application. All other embodiments obtained by those of ordinary skill in the art based on the embodiments of the present application without any creative effort shall fall within the scope of protection of the present application.
When the following description involves the accompanying drawings, unless otherwise indicated, the same numerals in different accompanying drawings represent the same or similar elements. Implementations described in the following exemplary embodiments do not represent all implementations consistent with the present application. Instead, the implementations are merely examples of an apparatus and a method that are described in the appended claims in detail and that are consistent with some aspects of the present application.
In the description of the present application, it should be understand that terms such as "first", "second", and "third" are used solely to distinguish similar objects and are not necessarily used to describe a specific order or sequence, nor should they be interpreted as indicating or implying relative importance. For those of ordinary skill in the art, the specific meanings of the above-mentioned terms in the present application may be understood according to specific situations. Additionally, in the descriptions of the present application, unless otherwise specified, "a plurality of" means two or more. "And/or" describes an association relationship between associated objects, and indicates that three relationships may exist. For example, A and/or B may represent the following three cases: only A exists, both A and B exist, and only B exists. The character "/"generally represents an "or" relationship between the associated objects.
It should be noted that, due to space limitations, the description of the present application does not exhaustively list all possible implementations. After reading the description of the present application, those skilled in the art should be able to conceive that any combination of technical features may constitute optional implementations, as long as the technical features do not contradict each other. The following provides a detailed description of each embodiment.
An LKAS is an advanced driver-assistance system that may assist a driver in keeping a vehicle in its traveling lane by automatically controlling a steering wheel. Generally, a core algorithm of the LKAS is integrated into an electronic control unit, and the electronic control unit may be either a standalone controller or a shared controller with other functions. The LKAS may read lane information provided by a camera and send an instruction to the steering wheel to adjust a traveling direction of the vehicle. Additionally, the LKAS may also obtain required vehicle information from other apparatuses through a vehicle communication network, such as a vehicle speed. The LKAS has a driver-assistance function rather than an autonomous driving function. The control of the LKAS over the steering wheel does not override the driver. If the driver intends to manually control the steering wheel without the assistance of the LKAS, the LKAS may proactively release control of the steering wheel.

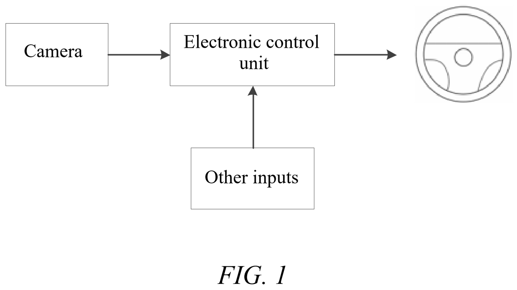

FIG. 1 is an architecture diagram of an LKAS. In FIG. 1, the electronic control unit is integrated with an LKAS algorithm. The camera, installed on the vehicle, may acquire images of a vehicle surrounding environment. Based on the acquired images, relevant information such as a lane width, a lane curvature, and a vehicle position in the lane may be derived. Other inputs refer to information acquired by various sensor apparatuses installed on the vehicle, such as the vehicle speed. Based on the received information, the electronic control unit may calculate information such as a steering angle or torque required for the steering wheel to rotate and send a steering instruction to the steering wheel based on the calculated information to control rotation of the steering wheel.

Currently, the control of a lane keeping function is mostly designed based on a proportional, integral, and differential (PID) controller, with an integral control portion of the PID usually being omitted. When calculating the steering angle of the steering wheel, the camera is required to provide a distance from the vehicle to a left lane line, a distance to a right lane line, a heading angle, and a road curvature, and additionally, a vehicle speed sensor is required to provide speed information. After obtaining the information, a gain for PD control is calculated. Based on the above-mentioned results, a steering angle instruction of the steering wheel is determined and output to act on the steering wheel.

However, different vehicles have different loads, especially for commercial vehicles, where the load significantly affects steering characteristics. In current methods, relevant information about the load on the vehicle cannot be obtained, which affects the calculation precision of the steering angle of the steering wheel, and consequently, affects the control precision of lane keeping for the vehicle.

The present application provides a method and an apparatus for controlling a vehicle traveling lane, a device, and a storage medium, to solve the above-mentioned technical problems in the prior art.

The technical solutions of the present application and how the technical solutions of the present application solve the above-mentioned technical problems are described in detail below with specific embodiments. The following specific embodiments may be combined with each other, and the same or similar concepts or processes may not be described in detail in some embodiments. Embodiments of the present application will be described below with reference to the accompanying drawings.

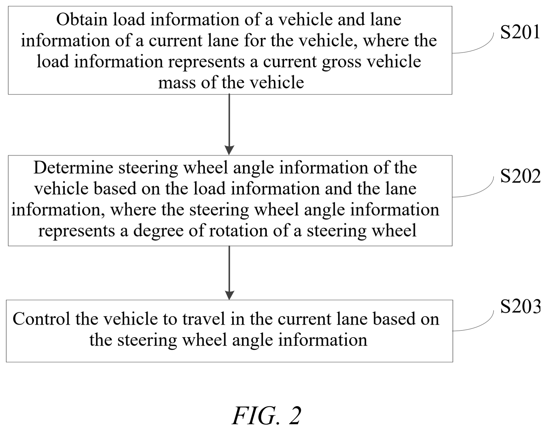

FIG. 2 is a schematic flowchart of a method for controlling a vehicle traveling lane according to an embodiment of the present application. The method may be performed by an apparatus for controlling a vehicle traveling lane. As shown in FIG. 2, the method includes the following steps:

S201: Obtain load information of a vehicle and lane information of a current lane for the vehicle. The load information represents a current gross vehicle mass of the vehicle.

For example, different vehicles may correspond to different load information. The load information may represent the current gross vehicle mass of the vehicle, for example, including a sum of an empty weight and a load weight. Current load information of the vehicle may be determined at any time during vehicle driving. For example, the empty weight and the load weight of the vehicle may be pre-entered before driving, which then can be obtained during a traveling process.

When the vehicle is traveling on a road, relevant information about the vehicle in the current lane may be obtained in real time as lane information. For example, the lane information may represent a traveling condition of the vehicle in the current lane, attribute information of the current lane, etc. The traveling condition may include information such as a vehicle traveling speed and position, and the attribute information may include information such as a lane curvature and a lane width. The lane information may be obtained using sensors and other apparatuses installed on the vehicle. For example, a camera installed on the vehicle may acquire relevant images of the lane, and by recognizing the images, the information such as the lane curvature and the lane width is determined.

In this embodiment, obtaining the load information of the vehicle includes: reading the load information of the vehicle through a CAN bus of the vehicle.

Specifically, a CAN network may be deployed on the vehicle. Through the CAN bus, relevant information about the gross vehicle mass may be read at any time, thereby obtaining the load information of the vehicle. For example, the load information may be in the form of CAN data. The CAN data from the CAN bus may be obtained from a brake system controller of the vehicle, and then the CAN data is transmitted to the electronic control unit of the LKAS.

The settings have the beneficial effects that the load information is obtained through the CAN network, so that the lane keeping function is assisted with the load information, thereby enhancing the precision and efficiency of lane keeping.

In this embodiment, the lane information includes at least one of the following: speed information, left-distance information, right-distance information, heading angle information, and lane curvature information of the vehicle. The left-distance information represents a distance between the vehicle and a left lane line, and the right-distance information represents a distance between the vehicle and a right lane line.

Specifically, the lane information may include the speed information, the left-distance information, the right-distance information, the heading angle information, the lane curvature information, etc. of the vehicle. The left-distance information refers to a distance between the vehicle and a left lane line next to the current lane, and the right-distance information refers to a distance between the vehicle and a right lane line next to the current lane. The heading angle information refers to a heading angle of the vehicle relative to a lane line.

The speed information may be obtained at any time by using a speed sensor on the vehicle. The left-distance information, the right-distance information, the heading angle information, and the lane curvature information may be obtained by capturing photos with the camera and then recognizing the photos. The obtained lane information may be transmitted in real time to the electronic control unit of the LKAS.

In this embodiment, obtaining the lane information of the current lane for the vehicle includes: obtaining speed information of the vehicle by using the vehicle speed sensor on the vehicle, and obtaining an environmental image of the current lane for the vehicle by using an image collector on the vehicle; and performing image recognition on the environmental image to obtain the left-distance information, the right-distance information, the heading angle information, and the lane curvature information of the vehicle.

Specifically, for the speed information in the lane information, the vehicle speed sensor is installed on the vehicle, and the vehicle speed sensor may be configured to acquire a current speed of the vehicle in real time. The vehicle speed sensor installed on the vehicle may obtain current speed information of the vehicle.

For the left-distance information, the right-distance information, the heading angle information, the lane curvature information, etc. in the lane information, the image collector such as the camera is installed on the vehicle, and the image collector may be configured to acquire an environmental image surrounding the vehicle in real time. The image collector installed on the vehicle may be used to obtain the environmental image of the current lane for the vehicle, that is, an image containing the current lane may be obtained. Based on a preset image recognition algorithm, the environmental image is recognized. For example, lane lines in the environmental image may be recognized. In this embodiment, the preset image recognition algorithm is not specifically limited. After obtaining the lane lines in the environmental image, a curvature of a lane where the vehicle is currently located may be determined as the lane curvature information, and the lane curvature information may represent a degree of curvature of the current lane. A position of the vehicle in the current lane may also be recognized. For example, it may be recognized that the vehicle is located exactly in the middle of the current lane. Based on the information such as the recognized lane lines, the left-distance information, the right-distance information, and the heading angle information of the vehicle may be obtained.

The settings have the beneficial effects that the camera provides a left distance, a right distance, a heading angle, and a road curvature, while the vehicle speed sensor provides the speed information, thereby providing a data basis for calculating steering angle information and improving the efficiency and precision of determining the steering wheel angle information.

S202: Determine the steering wheel angle information of the vehicle based on the load information and the lane information. The steering wheel angle information represents a degree of rotation of a steering wheel.

For example, after obtaining the current load information and lane information, the steering wheel angle information is calculated based on the load information and the lane information. The steering wheel angle information may represent the degree of rotation of the steering wheel. For example, the steering wheel angle information may be a steering angle or torque for the steering wheel.

A calculation formula for the steering wheel angle information may be preset. The load information and the lane information are substituted into the preset calculation formula, to obtain a calculation result that is the steering wheel angle information. For example, a weighted calculation may be performed on the load information separately with each piece of lane information to obtain the steering wheel angle information. In this embodiment, the preset calculation formula is not specifically limited.

S203: Control the vehicle to travel in the current lane based on the steering wheel angle information.

For example, the steering wheel angle information is sent as a rotation instruction to the steering wheel of the vehicle. After receiving the instruction, the steering wheel automatically rotates to adjust the traveling direction of the vehicle, thereby allowing the vehicle to continue traveling within the current lane. For example, if the steering wheel angle information indicates a clockwise rotation of 10 degrees, the steering wheel may rotate by 10 degrees clockwise.

In this embodiment of the present application, the load information of the vehicle and the lane information of the current lane for the vehicle are obtained, so that the current gross vehicle mass of the vehicle and the traveling condition in the lane may be obtained. The steering wheel angle information of the vehicle is determined based on the load information and the lane information, thereby improving the precision of determining the steering wheel angle information. Based on the steering wheel angle information, the steering wheel is controlled to rotate, thereby keeping the vehicle traveling in the current lane, enhancing the driving precision of the vehicle, and improving the driving experience of a user.

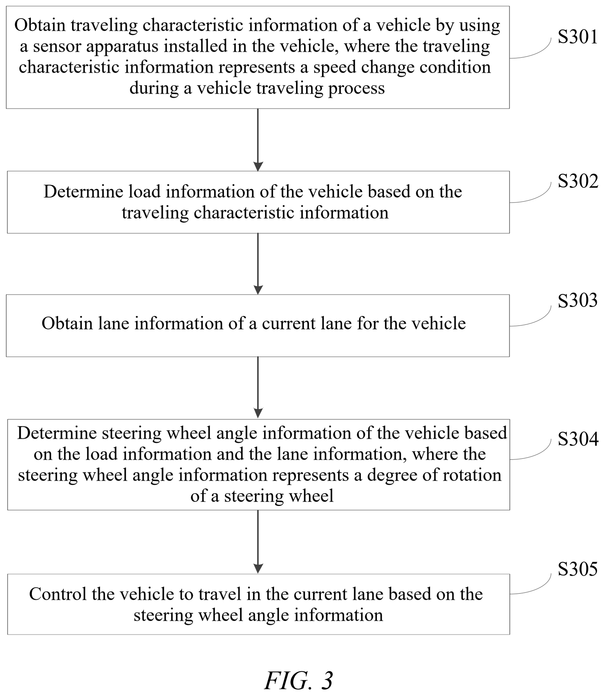

FIG. 3 is a schematic flowchart of a method for controlling a vehicle traveling lane according to an embodiment of the present application. This embodiment is an optional embodiment based on the above-mentioned embodiment.

In this embodiment, obtaining a device type of a device to be recognized based on a traffic block sequence and a preset terminal device type recognition model may be refined as: determining traffic characteristics of each traffic block in the traffic block sequence, where the traffic characteristics represent at least one of a traffic volume of a traffic block, a packet length, a number of packets, a network transmission protocol, or a packet transmission direction, the traffic volume is a number of bytes of a packet, and the packet transmission direction indicates a direction of packet receiving or packet sending; and inputting the traffic characteristics of all traffic blocks in the traffic block sequence into the preset terminal device type recognition model to obtain the device type of the device to be recognized.

As shown in FIG. 3, the method includes the following steps:

S301: Obtain traveling characteristic information of the vehicle by using a sensor apparatus installed in the vehicle. The traveling characteristic information represents a speed change condition during a vehicle traveling process.

For example, various sensor apparatuses may be installed on the vehicle, and the sensor apparatus may be configured to acquire the traveling characteristic information of the vehicle, where the traveling characteristic information may represent the speed change condition during the vehicle traveling process, that is, determining fluctuations in a vehicle speed. For example, an acceleration sensor may be installed on the vehicle to obtain information about the vehicle, such as acceleration and deceleration.

In this embodiment, the sensor apparatus includes an accelerator pedal sensor and the acceleration sensor. Obtaining the traveling characteristic information of the vehicle by using the sensor apparatus installed in the vehicle includes: obtaining accelerator opening information by using the accelerator pedal sensor in the vehicle, where the accelerator opening information represents a degree of opening and closing of an accelerator pedal; obtaining acceleration information by using the acceleration sensor in the vehicle; and determining the accelerator opening information and the acceleration information as the traveling characteristic information of the vehicle.

Specifically, the sensor apparatus in the vehicle may include the accelerator pedal sensor, the acceleration sensor, etc. The accelerator pedal sensor may be configured to read the accelerator opening information, and the acceleration sensor may be configured to read the acceleration information. The accelerator opening information may represent the degree of opening and closing of the accelerator pedal. The accelerator opening information and the acceleration information may be determined as the traveling characteristic information of the vehicle. That is, the traveling characteristic information includes the accelerator opening information and the acceleration information.

The settings have the beneficial effects that stepping on the accelerator pedal affects the speed fluctuations of the vehicle, and the acceleration is also related to the speed fluctuations of the vehicle. The speed fluctuations of vehicles with different weights may be different. Therefore, an equivalent mass may be obtained using the accelerator opening information and the acceleration information as the load information of the vehicle, thereby improving the precision of subsequent vehicle control.

S302: Determine the load information of the vehicle based on the traveling characteristic information.

For example, different traveling characteristic information may correspond to different load information. For example, an association relationship between the traveling characteristic information and the load information may be preset. The corresponding load information is determined based on the determined traveling characteristic information. For example, if the traveling characteristic information represents faster speed fluctuations of the vehicle, the mass represented by the load information is smaller. The traveling characteristic information may also be calculated to obtain the load information of the vehicle. The load information may be determined to facilitate the determination of the steering wheel angle information, thereby enhancing the precision of steering wheel angle determination and thus improving the precision of driving control.

In this embodiment, high-pass filtering is performed on the traveling characteristic information by using a preset high-pass filter to obtain filtered information, where the filtered information represents the traveling characteristic information within a preset frequency range; and the load information of the vehicle is determined based on the filtered information.

Specifically, the high-pass filter may filter data according to frequency levels. The preset high-pass filter is used to perform high-pass filtering on the traveling characteristic information. For example, the traveling characteristic information within the preset frequency range may be retained, while the traveling characteristic information outside the preset frequency range may be filtered out. The retained information after filtering is determined as the filtered information, in other words, the filtered information represents the traveling characteristic information within the preset frequency range. High-frequency traveling characteristic information may be retained, while low-frequency traveling characteristic information may be filtered out. For example, a high-frequency range may be 5 Hz or above.

Based on the filtered information, the corresponding mass is determined as the load information of the vehicle. For example, the filtered information may be calculated or the association relationship may be searched to obtain the load information.

The settings have the beneficial effects that by filtering the traveling characteristic information, the impact of redundant data may be reduced and the precision of determining the load information may be improved, thereby improving the precision of determining the steering wheel angle information.

In this embodiment, performing high-pass filtering on the traveling characteristic information by using the preset high-pass filter to obtain the filtered information includes: performing high-pass filtering on the obtained accelerator opening information of the vehicle by using the preset high-pass filter to obtain a target accelerator opening, and performing high-pass filtering on the obtained acceleration information of the vehicle by using the preset high-pass filter to obtain a target acceleration; and determining the target accelerator opening and the target acceleration as the filtered information.

Specifically, the traveling characteristic information may include the accelerator opening information and the acceleration information, and high-pass filtering may be separately performed on the accelerator opening information and the acceleration information by using the high-pass filter. That is, the high-pass filtering may be performed on the accelerator opening information, and the high-pass filtering may be performed on the acceleration information.

Information obtained after the high-pass filtering is performed on the accelerator opening information is determined as the target accelerator opening. Information obtained after the high-pass filtering is performed on the acceleration information is determined as the target acceleration. Both the target accelerator opening and the target acceleration are high-frequency characteristic quantities, thereby eliminating the impact of low-frequency characteristics such as a road slope and a ground friction. The target accelerator opening and the target acceleration are determined as the filtered information. In other words, the filtered information may include both the target accelerator opening and the target acceleration.

The settings have the beneficial effects that the high-pass filtering is separately performed on the accelerator opening information and the acceleration information, to reduce the impact of environmental factors, improve data accuracy, and then, improve the control precision of vehicle driving.

In this embodiment, the acceleration information includes a longitudinal acceleration and a lateral acceleration. Performing high-pass filtering on the acceleration information by using the preset high-pass filter to obtain the target acceleration includes: extracting the longitudinal acceleration from the acceleration information; and performing high-pass filtering on the longitudinal acceleration by using the preset high-pass filter to obtain the target acceleration.

Specifically, the acceleration output by the acceleration sensor includes the lateral acceleration and the longitudinal acceleration, a longitudinal direction is a traveling direction of the vehicle, and a lateral direction is a direction perpendicular to the traveling direction of the vehicle. Since the load on the vehicle has a minor impact on the lateral acceleration, the lateral acceleration may be discarded, and the longitudinal acceleration is extracted from the acceleration information. The high-pass filtering is performed on the longitudinal acceleration by using the preset high-pass filter, and the filtered longitudinal acceleration is determined as the target acceleration.

The settings have the beneficial effects that the longitudinal acceleration of the whole vehicle is obtained, so that the impact of the lateral acceleration on subsequent load information determination is reduced, thereby enhancing the precision of determining the load information.

In this embodiment, the filtered information includes the target accelerator opening and the target acceleration. The load information of the vehicle being determined based on the filtered information includes: dividing the target accelerator opening by the target acceleration to obtain the load information of the vehicle.

Specifically, the filtered information may include the target accelerator opening and the target acceleration, and the load information of the vehicle may be determined based on the target accelerator opening and the target acceleration. A calculation formula for the load information may be preset. For example, the calculation formula may be: Load information = Target accelerator opening/Target acceleration. The target accelerator opening may be divided by the target acceleration to obtain an equivalent mass, which is the current load information of the vehicle.

The settings have the beneficial effects that without prior knowledge of a current weight of the vehicle, the current overall equivalent weight can be quickly obtained, thereby facilitating subsequent consideration of the impact of the load on the rotation of the steering wheel and enhancing the precision of vehicle control.

S303: Obtain the lane information of the current lane for the vehicle.

For example, this step may be performed either before S301 and S302 or after S301 and S302, as long as this step is performed before S304.

S304: Determine the steering wheel angle information of the vehicle based on the load information and the lane information. The steering wheel angle information represents the degree of rotation of the steering wheel.

For example, for this step, reference may be made to step S202 described above, and details are not described herein again.

S305: Control the vehicle to travel in the current lane based on the steering wheel angle information.

For example, for this step, reference may be made to step S203 described above, and details are not described herein again.

In this embodiment of the present application, the load information of the vehicle and the lane information of the current lane for the vehicle are obtained, so that the current gross vehicle mass of the vehicle and the traveling condition in the lane may be obtained. The steering wheel angle information of the vehicle is determined based on the load information and the lane information, thereby improving the precision of determining the steering wheel angle information. Based on the steering wheel angle information, the steering wheel is controlled to rotate, thereby keeping the vehicle traveling in the current lane, enhancing the driving precision of the vehicle, and improving the driving experience of a user.

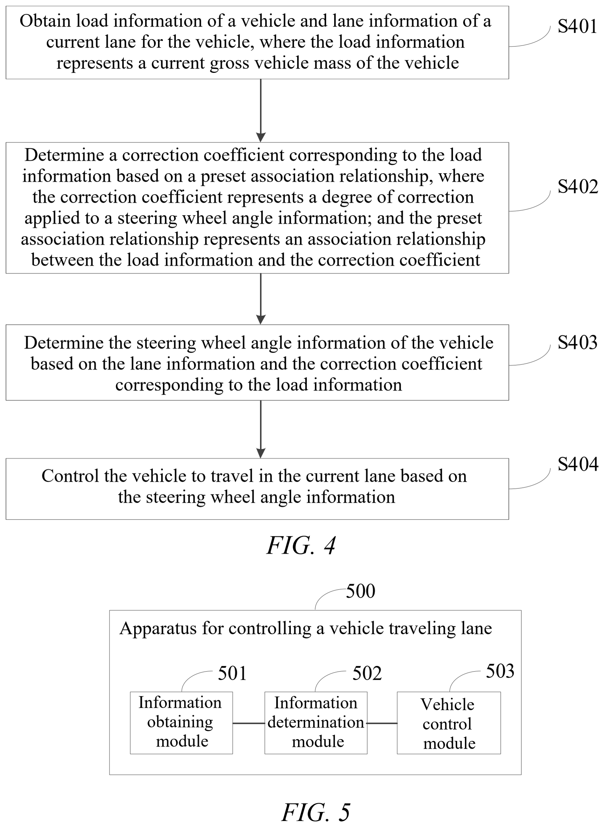

FIG. 4 is a schematic flowchart of a method for controlling a vehicle traveling lane according to an embodiment of the present application. This embodiment is an optional embodiment based on the above-mentioned embodiment.

In this embodiment, determining the steering wheel angle information of the vehicle based on the load information and the lane information includes: determining a correction coefficient corresponding to the load information based on a preset association relationship, where the correction coefficient represents a degree of correction applied to the steering wheel angle information; and the preset association relationship represents an association relationship between the load information and the correction coefficient; and determining the steering wheel angle information of the vehicle based on the lane information and the correction coefficient corresponding to the load information.

As shown in FIG. 4, the method includes the following steps:
S401: Obtain the load information of the vehicle and the lane information of the current lane for the vehicle. The load information represents the current gross vehicle mass of the vehicle.

For example, for this step, reference may be made to step S201 described above, and details are not described herein again.

S402: Determine the correction coefficient corresponding to the load information based on the preset association relationship. The correction coefficient represents the degree of correction applied to the steering wheel angle information. The preset association relationship represents the association relationship between the load information and the correction coefficient.

For example, the association relationship between the load information and the correction coefficient is preset. After determining the current load information of the vehicle, the correction coefficient corresponding to the load information is determined based on the preset association relationship. The correction coefficient may represent the degree of correction applied to the steering wheel angle information. In other words, the steering wheel angle information needs to be adjusted based on the correction coefficient.

The correction coefficient may be a natural number which is 0 or more. For example, the correction coefficient may range from 0 to 5, while the load information of the vehicle mostly falls between 5 tons and 50 tons. An example of the preset association relationship is that the load information of 10 tons corresponds to the correction coefficient of 2.2.

S403: Determine the steering wheel angle information of the vehicle based on the lane information and the correction coefficient corresponding to the load information.

For example, the correction coefficient corresponding to the load information is determined as a target correction coefficient. The steering wheel angle information of the vehicle may be calculated based on various lane information and the target correction coefficient. The target correction coefficient is considered, so that the precision of determining the steering wheel angle information is improved.

In this embodiment, the lane information includes: speed information, left-distance information, right-distance information, heading angle information, and lane curvature information of the vehicle. Determining the steering wheel angle information of the vehicle based on the lane information and the correction coefficient corresponding to the load information includes: determining position information of the vehicle in the current lane based on the left-distance information and the right-distance information; performing differential processing on the position information to obtain a position differential result; performing differential processing on the heading angle information to obtain a heading angle differential result; and determining the steering wheel angle information of the vehicle based on the position information, the position differential result, the heading angle information, the heading angle differential result, the speed information, the lane curvature information, and the correction coefficient corresponding to the load information.

Specifically, when calculating the steering wheel angle information, the lane information used may include the speed information, the left-distance information, the right-distance information, the heading angle information, the lane curvature information, etc. of the vehicle. That is, the steering wheel angle information is obtained by calculating the speed information, the left-distance information, the right-distance information, the heading angle information, the lane curvature information, and the target correction coefficient.

First, the position information of the vehicle in the current lane may be determined based on the left-distance information and the right-distance information. The position information may represent a position error between the vehicle and a center position of the current lane, which is used to adjust the traveling direction of the vehicle. A calculation formula for the position information may be: Position information = (Left-distance information - Right-distance information)/2. After obtaining the position information, differential processing is performed on the position information, and a processed result is determined as the position differential result. Differential processing may also be performed on the heading angle information, and a processed result is determined as the heading angle differential result. In this embodiment, a differential calculation method is not specifically limited.

The steering wheel angle information of the vehicle may be calculated based on the position information, the position differential result, the heading angle information, the heading angle differential result, the speed information, the lane curvature information, and the target correction coefficient. For example, the above-mentioned data may be substituted into a preset formula to obtain the steering wheel angle information.

The settings have the beneficial effects that by considering the position, the heading angle, the speed, and the road curvature of the vehicle, the calculation process is adjusted based on the correction coefficient, thereby enhancing the calculation precision of the steering wheel angle information, avoiding the impact of the load information on the traveling direction, and improving the driving precision of the vehicle.

In this embodiment, determining the steering wheel angle information of the vehicle based on the position information, the position differential result, the heading angle information, the heading angle differential result, the speed information, the lane curvature information, and the correction coefficient corresponding to the load information includes: determining a first control coefficient, a second control coefficient, a third control coefficient, and a fourth control coefficient based on the speed information and the correction coefficient corresponding to the load information, where the first control coefficient represents a degree of influence of the position information on the steering wheel angle information, the second control coefficient represents a degree of influence of the position differential result on the steering wheel angle information, the third control coefficient represents a degree of influence of the heading angle information on the steering wheel angle information, and the fourth control coefficient represents a degree of influence of the heading angle differential result on the steering wheel angle information; determining a fifth control coefficient based on the correction coefficient corresponding to the load information, where the fifth control coefficient represents a degree of influence of the lane curvature information on the steering wheel angle information; and determining the steering wheel angle information of the vehicle based on the position information, the position differential result, the heading angle information, the heading angle differential result, the lane curvature information, the first control coefficient, the second control coefficient, the third control coefficient, the fourth control coefficient, and the fifth control coefficient.

Specifically, for the current vehicle speed of the vehicle, PD control coefficients at the vehicle speed are determined. The PD control coefficients represent gains for PD control, and the PD control coefficients may include the first control coefficient, the second control coefficient, the third control coefficient, the fourth control coefficient, and the fifth control coefficient. The first control coefficient, the second control coefficient, the third control coefficient, and the fourth control coefficient may be determined based on the speed information and the target correction coefficient. The fifth control coefficient may be determined based on the target correction coefficient.

The first control coefficient may represent the degree of influence of the position information on the steering wheel angle information. That is, the first control coefficient may be considered as a weight of the position information. The second control coefficient may represent the degree of influence of the position differential result on the steering wheel angle information. That is, the second control coefficient may be considered as a weight of the position differential result. The third control coefficient may represent the degree of influence of the heading angle information on the steering wheel angle information. That is, the third control coefficient may be considered as a weight of the heading angle information. The fourth control coefficient may represent the degree of influence of the heading angle differential result on the steering wheel angle information. That is, the fourth control coefficient may be considered as a weight of the heading angle differential result. The fifth control coefficient may represent the degree of influence of the lane curvature information on the steering wheel angle information. That is, the fifth control coefficient may be considered as a weight of the lane curvature information. Calculation formulas for different PD control coefficients may be preset to respectively calculate the PD control coefficients.

The steering wheel angle information of the vehicle is obtained based on the position information, the position differential result, the heading angle information, the heading angle differential result, the lane curvature information, the first control coefficient, the second control coefficient, the third control coefficient, the fourth control coefficient, and the fifth control coefficient. For example, a weighted summation calculation may be performed on the lane information based on the PD control coefficients. The calculation formula for the steering wheel angle information may be:

$$Z = m_1 \times \alpha_1 + m_2 \times \alpha_2 + m_3 \times \alpha_3 + m_4 \times \alpha_4 + m_5 \times \alpha_5,$$

where Z represents the steering wheel angle information, $m_1$ represents the position information, $m_2$ represents the position differential result, $m_3$ represents the heading angle information, $m_4$ represents the heading angle differential result, $m_5$ represents the lane curvature information, $\alpha_1$ represents the first control coefficient, $\alpha_2$ represents the second control coefficient, $\alpha_3$ represents the third control coefficient, $\alpha_4$ represents the fourth control coefficient, and $\alpha_5$ represents the fifth control coefficient.

The settings have the beneficial effects that by calculating the PD control coefficients for different vehicle speeds, and in combination with corresponding lane information, the steering wheel angle information is quickly obtained, such that the precision and efficiency of determining the steering wheel angle information are improved, and then the precision and efficiency of vehicle driving are improved.

In this embodiment, the first control coefficient is represented as $\alpha_1 = (K_1/v^2) \times \beta$; the second control coefficient is represented as $\alpha_2 = (K_2/v^2) \times \beta$; the third control coefficient is represented as $\alpha_3 = (K_3/v) \times \beta$; the fourth control coefficient is represented as $\alpha_4 = (K_4/v) \times \beta$; and the fifth control coefficient is represented as $\alpha_5 = K_5 \times \beta$,

where $\alpha_1$ is the first control coefficient, $\alpha_2$ is the second control coefficient, $\alpha_3$ is the third control coefficient, $\alpha_4$ is the fourth control coefficient, $\alpha_5$ is the fifth control coefficient, v represents the speed information, $\beta$ represents the correction coefficient corresponding to the load information, and $K_1$, $K_2$, $K_3$, $K_4$, and $K_5$ are all preset calibration parameters.

Specifically, the calculation formulas for different PD control coefficients are preset. For each PD control coefficient, the load information is taken into account. In other words, the correction coefficient corresponding to the load information exists in each formula. Five calibration parameters are preset, and each type of lane information corresponds to one preset calibration parameter, thereby achieving targeted determination of the different PD control coefficients. Gains for PD control are calculated based on the calibration parameters and the vehicle speed. Finally, the steering wheel angle information is calculated based on results of the gains and is output to act on the steering wheel.

The settings have the beneficial effects that by rapidly calculating different PD control gains while taking the influence of the load on the vehicle into account, the precision and efficiency of calculating the steering wheel angle information are improved.

S404: Control the vehicle to travel in the current lane based on the steering wheel angle information.

For example, for this step, reference may be made to step S203 described above, and details are not described herein again.

In this embodiment of the present application, the load information of the vehicle and the lane information of the current lane for the vehicle are obtained, so that the current gross vehicle mass of the vehicle and the traveling condition in the lane may be obtained. The steering wheel angle information of the vehicle is determined based on the load information and the lane information, thereby improving the precision of determining the steering wheel angle information. Based on the steering wheel angle information, the steering wheel is controlled to rotate, thereby keeping the vehicle traveling in the current lane, enhancing the driving precision of the vehicle, and improving the driving experience of a user.

FIG. 5 is a block diagram of a structure of an apparatus for controlling a vehicle traveling lane according to an embodiment of the present disclosure. For ease of description, only parts related to this embodiment of the present disclosure are shown. Referring to FIG. 5, the apparatus 500 for controlling a vehicle traveling lane includes: an information obtaining module 501, an information determination module 502, and a vehicle control module 503.

The information obtaining module 501 is configured to obtain load information of a vehicle and lane information of a current lane for the vehicle. The load information represents a current gross vehicle mass of the vehicle.

The information determination module 502 is configured to determine steering wheel angle information of the vehicle based on the load information and the lane information. The steering wheel angle information represents a degree of rotation of a steering wheel.

The vehicle control module 503 is configured to control the vehicle to travel in the current lane based on the steering wheel angle information.

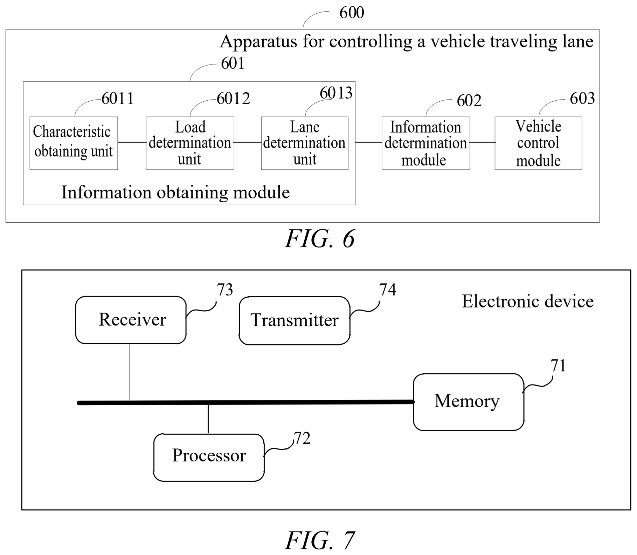

FIG. 6 is a block diagram of a structure of an apparatus for controlling a vehicle traveling lane according to an embodiment of the present disclosure. As shown in FIG. 6, an apparatus 600 for controlling a vehicle traveling lane includes an information obtaining module 601, an information determination module 602, and a vehicle control module 603, where the information obtaining module 601 includes a characteristic obtaining unit 6011, a load determination unit 6012, and a lane determination unit 6013.

The characteristic obtaining unit 6011 is configured to obtain traveling characteristic information of a vehicle by using a sensor apparatus installed in the vehicle. The traveling characteristic information represents a speed change condition during a vehicle traveling process.

The load determination unit 6012 is configured to determine load information of the vehicle based on the traveling characteristic information.

The lane determination unit 6013 is configured to obtain lane information of a current lane for the vehicle.

In an example, the sensor apparatus includes an accelerator pedal sensor and an acceleration sensor. The characteristic obtaining unit 6011 includes:

an opening determination subunit configured to obtain accelerator opening information by using the accelerator pedal sensor in the vehicle, where the accelerator opening information represents a degree of opening and closing of an accelerator pedal;
an acceleration obtaining subunit configured to obtain acceleration information by using the acceleration sensor in the vehicle; and
a characteristic determination subunit configured to determine the accelerator opening information and the acceleration information as the traveling characteristic information of the vehicle.

In an example, the load determination unit 6012 includes:

a high-pass filtering subunit configured to perform high-pass filtering on the traveling characteristic information by using a preset high-pass filter to obtain filtered information, where the filtered information represents traveling characteristic information within a preset frequency range; and
a load determination subunit configured to determine the load information of the vehicle based on the filtered information.

In an example, the high-pass filtering subunit is specifically configured to:

perform high-pass filtering on the obtained accelerator opening information of the vehicle by using the preset high-pass filter to obtain a target accelerator opening, and perform high-pass filtering on the obtained acceleration information of the vehicle by using the preset high-pass filter to obtain a target acceleration; and

determine the target accelerator opening and the target acceleration as the filtered information.

In an example, the acceleration information includes a longitudinal acceleration and a lateral acceleration. The high-pass filtering subunit is specifically configured to:

extract the longitudinal acceleration from the acceleration information; and
perform high-pass filtering on the longitudinal acceleration by using the preset high-pass filter to obtain the target acceleration.

In an example, the filtered information includes the target accelerator opening and the target acceleration. The load determination subunit is specifically configured to:

divide the target accelerator opening by the target acceleration to obtain the load information of the vehicle.

In an example, the information obtaining module 601 includes:

a data reading unit configured to read the load information of the vehicle through a CAN bus of the vehicle.

In an example, the lane information includes at least one of the following: speed information, left-distance information, right-distance information, heading angle information, and lane curvature information of the vehicle, where the left-distance information represents a distance between the vehicle and a left lane line, and the right-distance information represents a distance between the vehicle and a right lane line.

In an example, the lane determination unit 6013 is specifically configured to:

obtain speed information of the vehicle by using a vehicle speed sensor on the vehicle, and obtain an environmental image of the current lane for the vehicle by using an image collector on the vehicle; and
perform image recognition on the environmental image to obtain the left-distance information, the right-distance information, the heading angle information, and the lane curvature information of the vehicle.

In an example, the information determination module 602 includes:

a coefficient determination unit configured to determine a correction coefficient corresponding to the load information based on a preset association relationship, where the correction coefficient represents a degree of correction applied to the steering wheel angle information; and the preset association relationship represents an association relationship between the load information and the correction coefficient; and
a steering angle determination unit configured to determine the steering wheel angle information of the vehicle based on the lane information and the correction coefficient corresponding to the load information.

In an example, the lane information includes: speed information, left-distance information, right-distance information, heading angle information, and lane curvature information of the vehicle. The steering angle determination unit includes:

a position determination subunit configured to determine position information of the vehicle in the current lane based on the left-distance information and the right-distance information;
a first differential subunit configured to perform differential processing on the position information to obtain a position differential result;
a second differential subunit configured to perform differential processing on the heading angle information to obtain a heading angle differential result; and
a steering angle determination subunit configured to determine the steering wheel angle information of the vehicle based on the position information, the position differential result, the heading angle information, the heading angle differential result, the speed information, the lane curvature information, and the correction coefficient corresponding to the load information.

In an example, the steering angle determination subunit is specifically configured to:

determine a first control coefficient, a second control coefficient, a third control coefficient, and a fourth control coefficient based on the speed information and the correction coefficient corresponding to the load information, where the first control coefficient represents a degree of influence of the position information on the steering wheel angle information, the second control coefficient represents a degree of influence of the position differential result on the steering wheel angle information, the third control coefficient represents a degree of influence of the heading angle information on the steering wheel angle information, and the fourth control coefficient represents a degree of influence of the heading angle differential result on the steering wheel angle information;

determine a fifth control coefficient based on the correction coefficient corresponding to the load information, where the fifth control coefficient represents a degree of influence of the lane curvature information on the steering wheel angle information; and

determine the steering wheel angle information of the vehicle based on the position information, the position differential result, the heading angle information, the heading angle differential result, the lane curvature information, the first control coefficient, the second control coefficient, the third control coefficient, the fourth control coefficient, and the fifth control coefficient.

In an example, the first control coefficient is represented as $\alpha_1 = (K_1/v^2) \times \beta$; the second control coefficient is represented as $\alpha_2 = (K_2/v^2) \times \beta$; the third control coefficient is represented as $\alpha_3 = (K_3/v) \times \beta$; the fourth control coefficient is represented as $\alpha_4 = (K_4/v) \times \beta$; and the fifth control coefficient is represented as $\alpha_5 = K_5 \times \beta$,

where $\alpha_1$ is the first control coefficient, $\alpha_2$ is the second control coefficient, $\alpha_3$ is the third control coefficient, $\alpha_4$ is the fourth control coefficient, $\alpha_5$ is the fifth control coefficient, v represents the speed information, $\beta$ represents the correction coefficient corresponding to the load information, and $K_1$, $K_2$, $K_3$, $K_4$, and $K_5$ are all preset calibration parameters.

FIG. 7 is a block diagram of a structure of an electronic device according to an embodiment of the present application. As shown in FIG. 7, the electronic device includes: a memory 71 and a processor 72. The memory 71 is a memory configured to store instructions executable by the processor 72.

The processor 72 is configured to perform the method provided in the above-mentioned embodiments.

The electronic device further includes a receiver 73 and a transmitter 74. The receiver 973 is configured to receive instructions and data sent by another device, and the transmitter 74 is configured to send instructions and data to an external device.

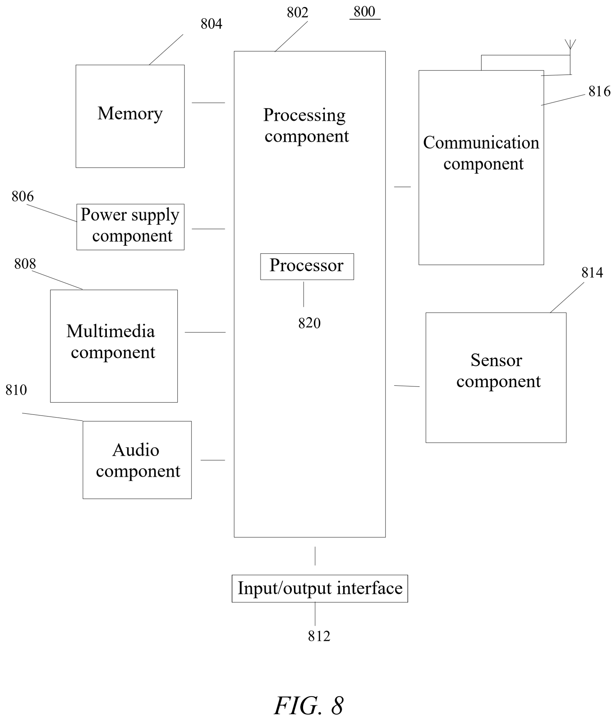

FIG. 8 is a block diagram of a terminal device according to an exemplary embodiment. The device may be a mobile phone, a computer, a digital broadcast terminal, a messaging device, a game console, a tablet device, a medical device, a fitness device, a personal digital assistant, etc.

An apparatus 800 may include one or more of the following components: a processing component 802, a memory 804, a power supply component 806, a multimedia component 808, an audio component 810, an input/output (I/O) interface 812, a sensor component 814, and a communication component 816.

The processing component 802 generally controls overall operations of the apparatus 800, such as operations associated with display, phone calls, data communication, camera operations, and recording operations. The processing component 802 may include one or more processors 820 to execute instructions, to complete all or part of the steps of the above-mentioned method. Additionally, the processing component 802 may include one or more modules to facilitate interaction between the processing component 802 and other components. For example, the processing component 802 may include a multimedia module to facilitate interaction between the multimedia component 808 and the processing component 802.

The memory 804 is configured to store various types of data to support operations of the apparatus 800. Examples of such data include instructions for any application or method operating on the apparatus 800, contact data, phonebook data, messages, pictures, videos, etc. The memory 804 may be implemented by any type of volatile or non-volatile memory device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc.

The power supply component 806 provides power for various components of the apparatus 800. The power supply component 806 may include a power management system, one or more power supplies, and other components associated with generating, managing, and distributing power for the apparatus 800.

The multimedia component 808 includes a screen that provides an output interface between the apparatus 800 and a user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may sense not only boundaries of touch or swipe actions but also detect a duration and pressure associated with such touch or swipe operations. In some embodiments, the multimedia component 808 includes a front-facing camera and/or a rear-facing camera. When the apparatus 800 is in an operation mode, such as a photo mode or a video mode, the front-facing camera and/or the rear-facing camera may receive external multimedia data. Each of the front-facing camera and the rear-facing camera may be a fixed optical lens system or have a focal length and an optical zoom capability.

The audio component 810 is configured to output and/or input an audio signal. For example, the audio component 810 includes a microphone (MIC). When the apparatus 800 is in the operation mode, such as a call mode, a recording mode, and a voice recognition mode, the microphone is configured to receive an external audio signal. The received audio signal may be further stored in the memory 804 or transmitted via the communication component 816. In some embodiments, the audio component 810 further includes a speaker for outputting the audio signal.

The I/O interface 812 provides an interface between the processing component 802 and a peripheral interface module, where the above-mentioned peripheral interface module may be a keyboard, a click wheel, buttons, etc. These buttons may include, but are not limited to: a home button, volume buttons, a activate button, and a lock button.

The sensor component 814 includes one or more sensors configured to provide state assessments of various aspects of the apparatus 800. For example, the sensor component 814 may detect an on/off state of the apparatus 800 and relative positioning of the components, such as a display and a keypad of the apparatus 800. The sensor component 814 may further detect changes in the position of the apparatus 800 or the position of one component of the apparatus 800, the presence or absence of user contact with the apparatus 800, the orientation or acceleration/deceleration of the apparatus 800, and temperature changes of the apparatus 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an acceleration sensor, a gyroscope sensor, a magnetic sensor, a pressure sensor, or a temperature sensor.

The communication component 816 is configured to facilitate wired or wireless communication between the apparatus 800 and other devices. The apparatus 800 may access a wireless network based on a communication standard, such as Wi-Fi, 2G, or 3G, or a combination thereof. In an exemplary embodiment, the communication component 816 receives a broadcast signal or broadcast-related information from an external broadcast management system via a broadcast channel. In an exemplary embodiment, the communication component 816 further includes a near field communication (NFC) module to facilitate short-range communication. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the apparatus 800 may be implemented using one or more application-specific integrated circuits (ASICs), digital signal processors (DSPs), digital signal processing devices (DSPDs), programmable logic devices (PLDs), field-programmable gate arrays (FPGAs), controllers, microcontrollers, microprocessors, or other electronic components to perform the above-mentioned method.

In an exemplary embodiment, a non-transitory computer-readable storage medium including instructions is further provided, such as the memory 804 including the instructions. The above-mentioned instructions may be executed by the processor 820 of the apparatus 800 to complete the above-mentioned method. For example, the non-transitory computer-readable storage medium may be a ROM, a random access memory (RAM), a CD-ROM, a magnetic tape, a floppy disk, an optical data storage device, etc.

A non-transitory computer-readable storage medium is provided. Instructions in the storage medium, when executed by a processor of a terminal device, cause the terminal device to perform the above-mentioned method for controlling a vehicle traveling lane for the terminal device.

The present application further discloses a computer program product, including a computer program. The computer program, when executed by a processor, causes the method in the embodiments to be implemented.

Various implementations of the systems and technologies described above in the present application can be implemented in a digital electronic circuit system, an integrated circuit system, a field-programmable gate array (FPGA), an application-specific integrated circuit (ASIC), an application-specific standard product (ASSP), a system-on-chip (SOC) system, a complex programmable logical device (CPLD), computer hardware, firmware, software, and/or a combination thereof. These various implementations may include: implementation in one or more computer programs, where the one or more computer programs may be executed and/or interpreted on a programmable system including at least one programmable processor. The programmable processor may be a dedicated or general-purpose programmable processor that can receive data and instructions from a storage system, at least one input apparatus, and at least one output apparatus, and transmit data and instructions to the storage system, the at least one input apparatus, and the at least one output apparatus.

Program code used to implement the method of the present application can be written in any combination of one or more programming languages. The program code may be provided for a processor or a controller of a general-purpose computer, a special-purpose computer, or other programmable data processing apparatuses, such that when the program code is executed by the processor or the controller, the functions/operations specified in the flowcharts and/or block diagrams are implemented. The program code may be completely executed on a machine, or partially executed on a machine, or may be, as an independent software package, partially executed on a machine and partially executed on a remote machine, or completely executed on a remote machine or an electronic device.

In the context of the present application, a machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and a pointing apparatus (for example, a mouse or a trackball) through which the user can provide an input to the computer. Other types of apparatuses can also be used to provide interaction with the user; for example, feedback provided to the user can be any form of sensory feedback (for example, visual feedback, auditory feedback, or tactile feedback); and an input from the user can be received in any form (including an acoustic input, a voice input, or a tactile input).

The systems and technologies described herein can be implemented in a computing system including a backend component (for example, as a data electronic device), in a computing system including a middleware component (for example, an application electronic device), in a computing system including a frontend component (for example, a user computer with a graphical user interface or a web browser through which the user can interact with the implementation of the systems and technologies described herein), or in a computing system including any combination of the backend component, the middleware component, and the frontend component. The components of the system can be connected to each other through digital data communication (for example, a communication network) in any form or medium. Examples of the communication network include: a local area network (LAN), a wide area network (WAN), and the Internet.

A computer system may include a client and an electronic device. The client and the electronic device are generally remote from each other and usually interact through the communication network. A relationship between the client and the electronic device is generated by computer programs running on the respective computers and having a client-electronic device relationship with each other. The electronic device may be a cloud electronic device, also known as a cloud computing electronic device or a cloud host, and is a host product in a cloud computing service system, to overcome defects of difficult management and weak business expansion in conventional physical hosts and virtual private server (VPS) services. The electronic device may alternatively be an electronic device in a distributed system, or an electronic device combined with a blockchain. It should be understood that steps may be reordered, added, or deleted based on the various forms of procedures shown above. For example, the steps recorded in the present application may be performed in parallel, in order, or in a different order, provided that the desired result of the technical solutions in the present application can be achieved, which is not limited herein.

Other embodiments of the present application will be apparent to those skilled in the art from consideration of the description and practicing of the invention disclosed herein. The present application aims to cover any variations, uses, or adaptive changes of the present application, which follow the general principles of the present application and include common general knowledge or customary technical means in the art that are not disclosed in the present application. The description and the embodiments are merely to be considered as illustrative, and the true scope and spirit of the present application are indicated by the appended claims.

It should be understood that the present application is not limited to the precise structures described above and shown in the accompanying drawings, and various modifications and changes may be made without departing from the scope of the present application. The scope of the present application is only defined by the appended claims.

**Claims**

1. A method for controlling a vehicle traveling lane, **characterized by** comprising:

   obtaining load information of a vehicle and lane information of a current lane for the vehicle, wherein the load information represents a current gross vehicle mass of the vehicle;
   determining steering wheel angle information of the vehicle based on the load information and the lane information, wherein the steering wheel angle information represents a degree of rotation of a steering wheel; and
   controlling the vehicle to travel in the current lane based on the steering wheel angle information.

2. The method according to claim 1, **characterized in that** obtaining the load information of the vehicle comprises:

   obtaining traveling characteristic information of the vehicle by using a sensor apparatus installed in the vehicle, wherein the traveling characteristic information represents a speed change condition during a vehicle traveling process; and
determining the load information of the vehicle based on the traveling characteristic information.

3. The method according to claim 2, **characterized in that** the sensor apparatus comprises an accelerator pedal sensor and an acceleration sensor; and obtaining the traveling characteristic information of the vehicle by using the sensor apparatus installed in the vehicle comprises:

obtaining accelerator opening information by using the accelerator pedal sensor in the vehicle, wherein the accelerator opening information represents a degree of opening and closing of an accelerator pedal;
obtaining acceleration information by using the acceleration sensor in the vehicle; and
determining the accelerator opening information and the acceleration information as the traveling characteristic information of the vehicle.

4. The method according to claim 2, **characterized in that** determining the load information of the vehicle based on the traveling characteristic information comprises:

performing high-pass filtering on the traveling characteristic information by using a preset high-pass filter to obtain filtered information, wherein the filtered information represents traveling characteristic information within a preset frequency range; and
determining the load information of the vehicle based on the filtered information.

5. The method according to claim 4, **characterized in that** performing high-pass filtering on the traveling characteristic information by using the preset high-pass filter to obtain the filtered information comprises:

performing high-pass filtering on the obtained accelerator opening information of the vehicle by using the preset high-pass filter to obtain a target accelerator opening, and performing high-pass filtering on the obtained acceleration information of the vehicle by using the preset high-pass filter to obtain a target acceleration; and
determining the target accelerator opening and the target acceleration as the filtered information.

6. The method according to claim 5, **characterized in that** the acceleration information comprises a longitudinal acceleration and a lateral acceleration; and performing high-pass filtering on the obtained acceleration information of the vehicle by using the preset high-pass filter to obtain the target acceleration comprises:

extracting the longitudinal acceleration from the acceleration information; and
performing high-pass filtering on the longitudinal acceleration by using the preset high-pass filter to obtain the target acceleration.

7. The method according to claim 4, **characterized in that** the filtered information comprises a target accelerator opening and a target acceleration; and determining the load information of the vehicle based on the filtered information comprises:
dividing the target accelerator opening by the target acceleration to obtain the load information of the vehicle.

8. The method according to claim 1, **characterized in that** obtaining the load information of the vehicle comprises:
reading the load information of the vehicle through a CAN bus of the vehicle.

9. The method according to claim 1, **characterized in that** the lane information comprises at least one of the following: speed information, left-distance information, right-distance information, heading angle information, and lane curvature information of the vehicle, wherein the left-distance information represents a distance between the vehicle and a left lane line, and the right-distance information represents a distance between the vehicle and a right lane line.

10. The method according to any one of claims 1 to 9, **characterized in that** obtaining the lane information of the current lane for the vehicle comprises:

obtaining speed information of the vehicle by using a vehicle speed sensor on the vehicle, and obtaining an environmental image of the current lane for the vehicle by using an image collector on the vehicle; and
performing image recognition on the environmental image to obtain the left-distance information, the right-distance information, the heading angle information, and the lane curvature information of the vehicle.

11. The method according to any one of claims 1 to 9, **characterized in that** determining the steering wheel angle information of the vehicle based on the load information and the lane information comprises:

determining a correction coefficient corresponding to the load information based on a preset association relationship, wherein the correction coefficient represents a degree of correction applied to the steering wheel angle information; and the preset association relationship represents an association relationship between the load information and the correction coefficient; and

determining the steering wheel angle information of the vehicle based on the lane information and the correction coefficient corresponding to the load information.

12. The method according to claim 11, **characterized in that** the lane information comprises: speed information, left-distance information, right-distance information, heading angle information, and lane curvature information of the vehicle; and determining the steering wheel angle information of the vehicle based on the lane information and the correction coefficient corresponding to the load information comprises:

determining position information of the vehicle in the current lane based on the left-distance information and the right-distance information;

performing differential processing on the position information to obtain a position differential result;

performing differential processing on the heading angle information to obtain a heading angle differential result; and

determining the steering wheel angle information of the vehicle based on the position information, the position differential result, the heading angle information, the heading angle differential result, the speed information, the lane curvature information, and the correction coefficient corresponding to the load information.

13. The method according to claim 12, **characterized in that** determining the steering wheel angle information of the vehicle based on the position information, the position differential result, the heading angle information, the heading angle differential result, the speed information, the lane curvature information, and the correction coefficient corresponding to the load information comprises:

determining a first control coefficient, a second control coefficient, a third control coefficient, and a fourth control coefficient based on the speed information and the correction coefficient corresponding to the load information, wherein the first control coefficient represents a degree of influence of the position information on the steering wheel angle information, the second control coefficient represents a degree of influence of the position differential result on the steering wheel angle information, the third control coefficient represents a degree of influence of the heading angle information on the steering wheel angle information, and the fourth control coefficient represents a degree of influence of the heading angle differential result on the steering wheel angle information;

determining a fifth control coefficient based on the correction coefficient corresponding to the load information, wherein the fifth control coefficient represents a degree of influence of the lane curvature information on the steering wheel angle information; and

determining the steering wheel angle information of the vehicle based on the position information, the position differential result, the heading angle information, the heading angle differential result, the lane curvature information, the first control coefficient, the second control coefficient, the third control coefficient, the fourth control coefficient, and the fifth control coefficient.

14. The method according to claim 13, **characterized in that** the first control coefficient is represented as $\alpha_1 = (K_1/v^2) \times \beta$; the second control coefficient is represented as $\alpha_2 = (K_2/v^2) \times \beta$; the third control coefficient is represented as $\alpha_3 = (K_3/v) \times \beta$; the fourth control coefficient is represented as $\alpha_4 = (K_4/v) \times \beta$; and the fifth control coefficient is represented as $\alpha_5 = K_5 \times \beta$,

wherein $\alpha_1$ is the first control coefficient, $\alpha_2$ is the second control coefficient, $\alpha_3$ is the third control coefficient, $\alpha_4$ is the fourth control coefficient, $\alpha_5$ is the fifth control coefficient, v represents the speed information, $\beta$ represents the correction coefficient corresponding to the load information, and $K_1$, $K_2$, $K_3$, $K_4$, and $K_5$ are all preset calibration parameters.

15. An apparatus for controlling a vehicle traveling lane, **characterized by** comprising:

an information obtaining module configured to obtain load information of a vehicle and lane information of a current lane for the vehicle, wherein the load information represents a current gross vehicle mass of the vehicle;

an information determination module configured to determine steering wheel angle information of the vehicle based on the load information and the lane information, wherein the steering wheel angle information represents a degree of rotation of a steering wheel; and

a vehicle control module configured to control the vehicle to travel in the current lane based on the steering wheel angle information.

16. An electronic device, **characterized by** comprising: a processor, and a memory communicatively connected to the processor, wherein

the memory stores computer-executable instructions; and

the processor executes the computer-executable instructions stored in the memory to implement a method according to any one of claims 1 to 14.

17. A computer-readable storage medium, **characterized in that** the computer-readable storage medium has computer-executable instructions stored therein, and the computer-executable instructions, when executed by a processor, are used to implement a method according to any one of claims 1 to 14.

18. A computer program product, **characterized by** comprising a computer program that, when executed by a processor, causes a method according to any one of claims 1 to 14 to be implemented.

*FIG. 1*

Obtain load information of a vehicle and lane information of a current lane for the vehicle, where the load information represents a current gross vehicle mass of the vehicle — S201

Determine steering wheel angle information of the vehicle based on the load information and the lane information, where the steering wheel angle information represents a degree of rotation of a steering wheel — S202

Control the vehicle to travel in the current lane based on the steering wheel angle information — S203

*FIG. 2*

Obtain traveling characteristic information of a vehicle by using a sensor apparatus installed in the vehicle, where the traveling characteristic information represents a speed change condition during a vehicle traveling process — S301

Determine load information of the vehicle based on the traveling characteristic information — S302

Obtain lane information of a current lane for the vehicle — S303

Determine steering wheel angle information of the vehicle based on the load information and the lane information, where the steering wheel angle information represents a degree of rotation of a steering wheel — S304

Control the vehicle to travel in the current lane based on the steering wheel angle information — S305

*FIG. 3*

| Obtain load information of a vehicle and lane information of a current lane for the vehicle, where the load information represents a current gross vehicle mass of the vehicle | S401 |

↓

| Determine a correction coefficient corresponding to the load information based on a preset association relationship, where the correction coefficient represents a degree of correction applied to a steering wheel angle information; and the preset association relationship represents an association relationship between the load information and the correction coefficient | S402 |

↓

| Determine the steering wheel angle information of the vehicle based on the lane information and the correction coefficient corresponding to the load information | S403 |

↓

| Control the vehicle to travel in the current lane based on the steering wheel angle information | S404 |

*FIG. 4*

500

| Apparatus for controlling a vehicle traveling lane |
| --- |

| 501 | 502 | 503 |
| Information obtaining module | Information determination module | Vehicle control module |

*FIG. 5*

*FIG. 6*

*FIG. 7*

*FIG. 8*

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

EP 25 21 0805

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2022 123518 A1 (FORD GLOBAL TECH LLC [US]) 23 March 2023 (2023-03-23) | 1,2, 8-11,15, 17,18 | INV. B60W30/12 B60W40/13 |
| Y A | * paragraph [0001] - paragraph [0050] * | 3,4,12 5-7,13, 14 | |
| | ----- | | |
| Y | JP 2002 081989 A (AISIN SEIKI; TOYOTA CENTRAL RES & DEV) 22 March 2002 (2002-03-22) * paragraphs [0024] - [0083] * | 3 | |
| | ----- | | |
| Y | DE 10 2021 210217 A1 (VOLKSWAGEN AG [DE]) 16 March 2023 (2023-03-16) * paragraph [0023] * | 3 | |
| | ----- | | |
| Y | CN 118 004 197 A (CHENGDU DAYUN AUTOMOBILE CO LTD) 10 May 2024 (2024-05-10) * the whole document * | 4 | |
| | ----- | | |
| Y | US 2017/101094 A1 (FIASCHETTI JOHN [US] ET AL) 13 April 2017 (2017-04-13) * paragraph [0024] - paragraph [0025] * | 12 | |
| | ----- | | |

**TECHNICAL FIELDS SEARCHED (IPC)**

B60W
B62D

## INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 19 March 2026 | Stolle, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04E07)

Europäisches
Patentamt

European
Patent Office

Office européen
des brevets

**INCOMPLETE SEARCH
SHEET C**

```
Claim(s) completely searchable:
        1-15, 17, 18

Claim(s) not searched:
        16

Reason for the limitation of the search:

In response to a Rule 62a EPC communication, the Applicant indicated
claims 1 - 15, and 17 - 18 to be searched. Accordingly, claim 16 was not
searched and is to be removed from the application.
```

## ANNEX TO THE EUROPEAN SEARCH REPORT
## ON EUROPEAN PATENT APPLICATION NO.

EP 25 21 0805

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2026

| Patent document cited in search report | Publication date | Patent family member(s) | Publication date |
|---|---|---|---|
| DE 102022123518 A1 | 23-03-2023 | CN 115848373 A<br>DE 102022123518 A1<br>US 2023088065 A1 | 28-03-2023<br>23-03-2023<br>23-03-2023 |
| JP 2002081989 A | 22-03-2002 | NONE | |
| DE 102021210217 A1 | 16-03-2023 | NONE | |
| CN 118004197 A | 10-05-2024 | NONE | |
| US 2017101094 A1 | 13-04-2017 | US 2017101094 A1<br>US 2019291732 A1 | 13-04-2017<br>26-09-2019 |

For more details about this annex : see Official Journal of the European Patent Office, No. 12/82